# DEMANDE DE BREVET EUROPEEN

(11) **EP 1 102 451 A2**
(43) Date de publication de la demande: **23.05.2001**
(21) Numéro de dépôt: 00403199.3
(22) Date de dépôt: 16.11.2000
(51) Int. Cl.: H04L 29/06

(54) **Procédé de validation de données dans un terminal**

(30) Priorité: 22.11.1999 FR 9914635
(71) Demandeur: ALCATEL, 75008 Paris (FR)
(72) Inventeur: Helaine, Hubert, Woodley Reading, Berkshire RG5 4UH (GB); Bury, Sébastien, 75002 Paris (FR)
(74) Mandataire: Lamoureux, Bernard

(57) **Abrégé**

L'invention a pour objet un procédé de validation de données envoyées depuis une source (4) à un terminal (2) sur un médium (8). Elle propose, avant l'envoi des données, de procéder à la définition d'un administrateur des données(6), avec une validation de l'administrateur; les données à envoyer sont ensuite signées par l'administrateur, puis envoyées au terminal. A réception par le terminal, les données signées envoyées sont authentifiées par vérification dans le terminal de la signature de l'administrateur.

## Description

La présente invention concerne l'établissement de connexions à un réseau du type Internet pour des terminaux, notamment mobiles, et plus particulièrement la validation ou authentification des données de provisionnement nécessaires à l'établissement d'une connexion.

De façon bien connue, l'établissement de connexions à travers un réseau tel que le réseau Internet implique l'allocation d'une adresse sur le réseau. L'allocation d'adresse est pour la plupart des utilisateurs une allocation d'adresse dynamique, effectuée par un fournisseur d'accès auprès duquel l'utilisateur est référencé. On appelle provisionnement primaire, ou provisionnement des données primaires l'étape de fourniture à un utilisateur des données permettant d'établir une première connexion à un fournisseur d'accès. Ces données comprennent tous les paramètres de toutes les couches nécessaires à la connexion au fournisseur d'accès, et par exemple le numéro de téléphone, le support de transmission utilisé, une identification d'utilisateur, un mot de passe etc. Dans le cas de connexions à un fournisseur d'accès à l'aide d'un ordinateur, le provisionnement primaire s'effectue souvent en fournissant à l'utilisateur un cédérom contenant les données de provisionnement, avec une adresse temporaire. Il est aussi connu de fournir les données de provisionnement primaire par courrier; les données sont alors recopiées par l'utilisateur à l'invite, à l'aide d'un logiciel approprié.

Apparaissent actuellement des terminaux mobiles, qui ont aussi une fonction de terminal pour réseau de téléphonie. Pour ces terminaux se pose le problème du provisionnement primaire, étant entendu que les solutions connues pour les ordinateurs ou des postes fixes peuvent difficilement être transposées. Un problème réside aussi dans le fait que les données de provisionnement primaire présentent souvent un volume important, et sont envoyées en plusieurs paquets distincts.

Il est aussi connu d'utiliser pour l'identification ou la vérification de l'intégrité de messages des algorithmes asymétriques; un tel algorithme asymétrique utilise une clé publique, et une clé privée, et peut notamment être utilisé pour l'identification sur le réseau Internet. Un utilisateur se voit affecter une clé privée, et une clé publique est diffusée et certifiée par un organisateur, pour cet utilisateur. La connaissance de la clé publique ne permet pas de retrouver la clef privée, en revanche, la connaissance de la clé publique permet de vérifier une signature par la clef privée. RSA est un exemple connu d'algorithme asymétrique. Un tel algorithme ne s'applique pas au provisionnement primaire, car une clé publique n'a de valeur pour la certification ou l'authentification que dans la mesure où elle émane d'une autorité qui peut la certifier. Le provisionnement primaire est une situation dans laquelle une telle autorité n'existe pas encore.

Il a été proposé d'utiliser une clé introduite dans le terminal lors de la fabrication, lors de l'achat, ou une clé fournie dans un module externe du genre carte à puce. Ces solutions ne sont pas satisfaisantes. De fait, pour les deux premières, la clé peut changer après la fabrication ou la vente du terminal, par exemple dans le cas où l'utilisateur contracte un abonnement auprès d'un nouveau fournisseur d'accès; par ailleurs, le propriétaire du domaine, destinataire des données de provisionnement, peut être différent du propriétaire du terminal. Pour la troisième solution se pose le problème du coût de la carte à puce; en outre, le propriétaire du domaine peut être différent du propriétaire de la carte à puce du terminal.

La norme ETSI/SMG4/MExE propose une procédure manuelle de provisionnement d'un premier certificat vers un terminal mobile. Le certificat est un certificat spécial d'administrateur du domaine de sécurité tiers parti dans le terminal. Ce certificat est utilisé dans la norme pour charger et valider les certificats racines (certificat "root" en langue anglaise). La procédure proposée dans cette norme est la suivante. Le terminal mobile et l'entité de provisionnement établissent un premier contact. L'utilisateur initie sur le terminal une requête de certificat de provisionnement primaire. L'entité de provisionnement envoie le certificat de provisionnement primaire, dans un paquet signé; comme on vient de l'expliquer, le terminal ne peut pas vérifier la signature du paquet reçu, du fait de l'absence d'une clef publique authentifiée. Le terminal calcule et affiche donc la signature du paquet reçu, et invite l'utilisateur à valider la signature. L'utilisateur établit un contact distinct avec l'entité de provisionnement, par courrier, téléphone ou toute autre liaison sûre, et obtient de la part de l'entité de provisionnement la signature qui devrait être affichée sur le terminal. L'utilisateur valide sur le terminal la signature proposée, s'il s'avère que la signature proposée par ailleurs par l'entité de provisionnement est identique. La validation sur le terminal équivaut à une authentification du certificat reçu.

L'invention propose une solution au problème de la validation ou authentification des données de provisionnement primaire, notamment pour les terminaux mobiles. Elle permet un provisionnement des données primaires, qui est simple pour l'utilisateur, et qui évite de devoir valider à plusieurs reprise les données transmises en plusieurs paquets.

Plus précisément, l'invention propose un procédé de validation dans un terminal de données provenant d'au moins une source, comprenant les étapes de:
- définition d'un administrateur;
- signature par l'administrateur des données;
- envoi au terminal des données signées par l'administrateur; et
- vérification dans le terminal de la signature de l'administrateur pour la validation des données.

Dans un mode de réalisation, les données sont des données de provisionnement primaire; il peut aussi s'agir de données de provisionnement secondaire, ou encore de données de provisionnement d'application.

Avantageusement, l'administrateur est distinct de la source. Dans un mode de réalisation, l'étape d'envoi des données est effectuée par la source ; dans un autre mode de réalisation, l'étape d'envoi des données est effectuée par l'administrateur.

Dans un mode de réalisation, l'étape de définition comprend une validation manuelle par un utilisateur sur le terminal d'une signature proposée par le terminal.

Dans un autre mode de réalisation, l'étape de définition comprend
- l'envoi d'un certificat par l'administrateur au terminal;
- le calcul d'une signature dans le terminal;
- l'affichage sur le terminal d'une invite d'entrée d'une signature ;
- la réception sur le terminal d'une signature entrée par l'utilisateur du terminal;
- la comparaison dans le terminal de la signature calculée et de la signature entrée par l'utilisateur, et
- la définition de l'administrateur par le certificat en fonction des résultats de l'étape de comparaison.

Dans encore un autre mode de réalisation, l'étape de définition d'un administrateur comprend la définition d'un administrateur dans le terminal, dans une carte à puce ou dans un support externe.

L'étape de définition d'un administrateur peut enfin comprendre la définition manuelle par l'utilisateur de l'administrateur sur le terminal.

Avantageusement, l'étape d'envoi des données s'effectue à l'initiative de la source. Elle peut aussi s'effectuer à l'initiative du terminal.

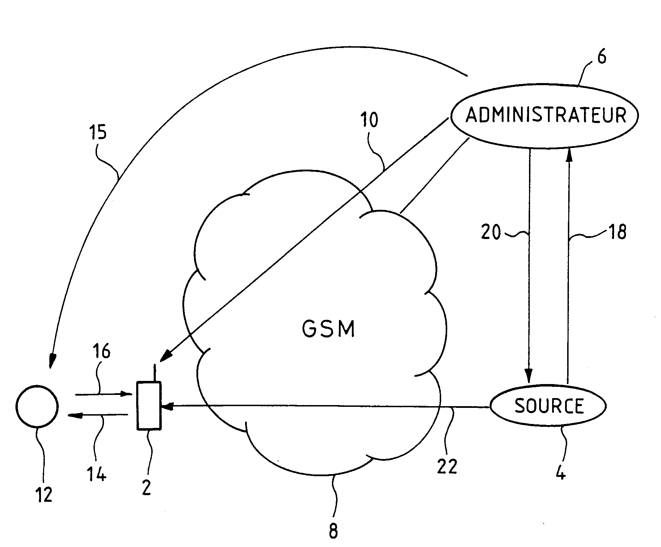

D'autres caractéristiques et avantages de l'invention apparaîtront à la lecture de la description qui suit de modes de réalisation de l'invention, donnés à titre d'exemple, et en référence aux dessins annexés, dont la figure unique montre un schéma d'un terminal mobile, d'une source de données et d'un administrateur.

Pour la validation des données de provisionnement, l'invention propose de définir un administrateur, et de commencer par valider ou authentifier les données de provisionnement grâce à l'administrateur. Du fait que l'administrateur est défini avant l'envoi des données de provisionnement, l'utilisateur ne doit intervenir que pour la définition de l'administrateur, mais pas au cours de l'envoi des données de provisionnement elles-mêmes. Ces données peuvent donc être envoyées en plusieurs paquets, ou en plusieurs instances, sans pour autant impliquer à chaque paquet ou instance une validation par l'utilisateur. L'invention limite les interventions de l'utilisateur pour le provisionnement primaire. Elle permet aussi un provisionnement à l'initiative de la source, et non plus seulement à l'initiative de l'utilisateur.

Dans la suite de la description, l'invention est décrite en référence à un exemple. Le terminal est un terminal mobile, la source est un fournisseur d'accès, et la source et le terminal communiquent par un réseau de type GSM. Les données sont des données de provisionnement primaire.

La figure montre un schéma du terminal mobile, d'une source de données, et d'un administrateur. On a porté à la figure le terminal mobile 2, une source de données 4, et un administrateur 6. Cette source de données est dans l'exemple un fournisseur d'accès au réseau Internet. Le terminal mobile et la source de données peuvent communiquer à travers un réseau de télécommunication 8, par exemple un réseau du type GSM. Dans l'exemple, l'administrateur 6 est distinct de la source de données; il pourrait aussi être confondu avec la source de données.

Comme indiqué plus haut, l'invention s'applique à la validation de données provenant de la source, et envoyés vers le terminal mobile. Ces données sont avantageusement des données de provisionnement primaire, qui sont élaborées dans la source, et sont envoyées vers le terminal mobile. Le problème de l'invention est de faciliter la validation de ces données, en limitant les interventions de l'utilisateur du terminal, même dans le cas où les données présentent un volume tel qu'elles ne peuvent pas être envoyées en un seul paquet, ou en une seule instance. Dans ce cas, la validation des données dans l'art antérieur implique plusieurs interventions de l'utilisateur.

Avant l'envoi des données, l'invention propose de définir un administrateur. La définition préalable d'un administrateur permet ensuite une signature des données par l'administrateur, et évite donc que l'utilisateur ne doive valider les données à réception. Pour la définition de l'administrateur, on peut utiliser simplement la procédure proposée dans la norme MExE mentionnée plus haut; dans ce cas, l'administrateur envoie un certificat, et l'utilisateur valide sur le terminal le certificat qui lui est proposé. On peut aussi utiliser les solutions connues, à base de clé stockée dans le terminal lors de sa fabrication ou de sa vente, ou encore stockée dans une carte à puce. L'administrateur pourrait ainsi être prédéfini dans le terminal, dans une carte à puce, ou dans un support externe. L'administrateur peut aussi être défini par l'utilisateur, qui le rentre manuellement dans le terminal les éléments de définition tels qu'une clef, grâce au clavier du terminal. On peut encore, pour la définition de l'administrateur, utiliser le procédé décrit dans la demande de brevet déposée le même jour que la présente demande, et intitulée "Procédé de validation du provisionnement primaire d'un terminal". La solution proposée dans cette demande est la suivante: l'administrateur envoie un certificat vers le terminal, à travers le réseau GSM 8, comme symbolisé sur la figure par la flèche 10. Ce certificat peut être envoyé à l'initiative de l'administrateur, ou encore sur requête du terminal.

Le certificat est reçu par le terminal 2, et est traité par le terminal pour calculer une signature. On entend par "calcul d'une signature" toute fonction permettant d'associer aux données reçues une signature, c'est-à-dire un nombre ou une chaîne alphanumérique d'une longueur généralement plus réduite que les données; la fonction est injective, ou à tout le moins, la probabilité que des données distinctes aient une même signature est faible. La signature au sens de cette définition utilisée pour la définition de l'administrateur couvre une signature au sens classique du terme, nécessitant une clef, comme une simple empreinte obtenue par hachage. Dans le mode de réalisation le plus simple, la signature est identique au certificat transmis par l'administrateur. Une fonction de calcul de signature couramment utilisée est le hachage. Pour le calcul de la signature, on peut utiliser une fonction de hachage, et par exemple celle des algorithmes SHA-1, MD5 ou MD2. L'algorithme de hachage SHA-1 fournit en sortie une empreinte de 20 octets. On peut utiliser un algorithme de signature à base de clef, comme l'algorithme RSA ECDSA. On peut aussi combiner un hachage et le calcul d'une signature sur l'empreinte obtenue par hachage ; cette solution diminue le temps de calcul, du fait du volume plus réduit des données.

Après calcul de la signature, le terminal 2 affiche, comme symbolisé par la flèche 14, une invite à destination de l'utilisateur 12, pour que l'utilisateur entre dans le terminal une signature. Dans le cas d'un terminal mobile classique, muni d'un écran et d'un clavier, le terme "affiche" correspond à l'impression sur l'écran d'un message d'invite, qui indique à l'utilisateur qu'il faut entrer une signature. Cette invite peut aussi être affichée par un signal sonore, ou tout autre moyen.

Le terminal attend ensuite l'entrée par l'utilisateur d'une signature. Cette étape peut être limitée dans le temps; le terminal peut aussi proposer à l'utilisateur d'interrompre le procédé de validation; ceci n'est pas représenté sur la figure. Dans un cas comme dans l'autre, la validation peut être reprise ultérieurement à l'initiative de la source. Dans le diagramme de la figure, la flèche 15 montre la réception d'une signature par l'utilisateur, depuis l'administrateur, et par l'intermédiaire d'un médium autre que le réseau GSM 8. On entend ici par autre médium, comme dans la procédure MExE toute voie de communication entre l'administrateur et l'utilisateur qui soit considérée comme fiable. Il peut s'agir d'un courrier, d'une transmission par téléphone, ou autre. La signature ainsi fournie par l'administrateur est une signature calculée à partir des données transmises vers le terminal, connaissant la fonction de calcul de la signature mise en oeuvre dans le terminal. On peut aussi pour fournir la signature à l'utilisateur utiliser un tiers autre que l'administrateur, et par exemple la source.

L'utilisateur, après s'être procuré auprès de l'administrateur ou du tiers la signature attendue par le terminal, rentre cette signature dans le terminal. Dans le cas le plus simple, cette entrée s'effectue grâce au clavier du terminal, mais d'autres solutions sont possibles, en fonction du dispositif d'entrée de données dont dispose le terminal. Cette entrée de données est symbolisée par la flèche 16 sur la figure.

Le terminal, après avoir reçu la signature entrée par l'utilisateur, compare la signature calculée à partir des données reçues depuis l'administrateur et la signature entrée par l'utilisateur. Dans le cas le plus simple, la signature entrée par l'utilisateur est identique à la signature calculée par le terminal. Il est aussi possible que la signature fournie à l'utilisateur par l'administrateur ou le tiers ne soit pas identique à la signature calculée: autrement dit la fonction de comparaison mise en oeuvre dans le terminal ne se réduit pas nécessairement à une comparaison terme à terme, mais peut inclure des calculs sur la signature introduite par l'utilisateur. La comparaison par le terminal permet au terminal de déterminer si la signature calculée à partir des données reçues depuis l'administrateur correspond à la signature entrée par l'utilisateur. Si tel est le cas, le terminal conclut que le certificat est valide, et l'étape de validation de l'administrateur est terminée. Si tel n'est pas le cas, le terminal peut afficher une nouvelle invite. On peut aussi interrompre le procédé de validation, ou limiter le nombre d'essai d'introduction de signature.

Après la validation de l'administrateur, le terminal peut authentifier les messages signés par l'administrateur, dans la mesure où il dispose d'un certificat émanant de l'administrateur. Il peut s'agir d'une clé publique d'un algorithme asymétrique, ou d'une clé d'un algorithme symétrique. Cette validation de l'administrateur permet alors la signature de données provenant de la source, et notamment la signature des données de provisionnement.

L'invention propose donc que les données transmises par la source après la validation de l'administrateur soient d'abord signées par l'administrateur. La flèche 18 sur la figure symbolise la transmission des données par la source 4 à l'administrateur 6; les données transmises sont signées par l'administrateur, et les données signées sont transmises vers le terminal 2. Dans l'exemple de la figure, les données signées par l'administrateur sont d'abord transmises par l'administrateur 6 vers la source 4, comme symbolisé par la flèche 20, puis sont ensuite transmises par la source 4 vers le terminal 2, comme symbolisé par la flèche 22. On pourrait aussi prévoir une transmission directe des données par l'administrateur vers le terminal.

Dans tous les cas, le terminal reçoit de la part de l'administrateur ou de la source des données signées par l'administrateur, le terminal vérifie la signature afin d'authentifier la provenance des données, puis il les valide. Il n'est donc plus nécessaire, comme dans l'art antérieur, de requérir l'intervention de l'utilisateur pour valider les données reçues

L'invention s'applique notamment à la transmission des données de provisionnement primaire. Dans ce cas, les données peuvent présenter un volume tel qu'elles ne peuvent pas être transmises en un seul paquet, ou en une seule instance. L'invention permet la transmission des données, et leur validation par la reconnaissance de la signature, sans intervention de l'utilisateur. L'invention s'applique non seulement à l'envoi des données de provisionnement primaire, mais aussi à l'envoi ultérieur de données modifiant les données de provisionnement primaire. Elle s'applique aussi à des données de provisionnement secondaire, c'est-à-dire à des données autres que celles strictement nécessaires pour l'établissement de la connexion. L'invention s'applique aussi au provisionnement de données d'application.

On notera aussi que l'envoi des données de provisionnement peut s'effectuer à l'initiative de l'utilisateur, comme dans les solutions de l'art antérieur. L'envoi des données de provisionnement peut aussi grâce à l'invention s'effectuer sans initiative de l'utilisateur, par exemple à l'initiative du terminal ou de la source, ou encore de l'administrateur, après l'étape de validation de l'administrateur.

Bien entendu, l'invention n'est pas limitée aux modes de réalisation préférés décrits plus haut. Elle s'applique à d'autres types de réseaux, à d'autres types de terminaux, pour d'autres types de données, et pour d'autres algorithmes d'authentification. On pourrait ainsi utiliser aussi bien l'invention pour authentifier des clés d'un algorithme symétrique. Dans l'exemple, les données proviennent d'une source unique. On peut aussi utiliser l'invention pour des données provenant depuis plusieurs sources. Dans ce cas, il peut être avantageux d'utiliser un seul administrateur pour valider les données provenant des différentes sources.

Dans tous les cas, l'invention permet de valider les données transmises par la source, en évitant toute intervention de l'utilisateur.

## Revendications

1. Procédé de validation dans un terminal (2) de données provenant d'au moins une source (4), comprenant les étapes de:
- définition (10, 14, 15, 16) d'un administrateur;
- signature (20) par l'administrateur des données;
- envoi (22) au terminal des données signées par l'administrateur; et
- vérification dans le terminal de la signature de l'administrateur pour la validation des données.

2. Le procédé de la revendication 1, caractérisé en ce que les données sont des données de provisionnement primaire.

3. Le procédé de la revendication 1, caractérisé en ce que les données sont des données de provisionnement secondaire.

4. Le procédé de la revendication 1, caractérisé en ce que les données sont des données de provisionnement d'application.

5. Le procédé de l'une des revendications 1 à 4, caractérisé en ce que l'administrateur est distinct de la source.

6. Le procédé de l'une des revendications 1 à 5, caractérisé en ce que l'étape d'envoi des données est effectuée par la source .

7. Le procédé de l'une des revendications 1 à 5, caractérisé en ce que l'étape d'envoi des données est effectuée par l'administrateur.

8. Le procédé de l'une des revendications 1 à 7, caractérisé en ce que l'étape de définition comprend une validation manuelle par un utilisateur sur le terminal d'une signature proposée par le terminal.

9. Le procédé de l'une des revendications 1 à 7, caractérisé en ce que l'étape de définition comprend
- l'envoi (8) d'un certificat par l'administrateur au terminal;
- le calcul d'une signature dans le terminal;
- l'affichage sur le terminal d'une invite d'entrée d'une signature ;
- la réception sur le terminal d'une signature entrée par l'utilisateur du terminal;
- la comparaison dans le terminal de la signature calculée et de la signature entrée par l'utilisateur, et
- la définition de l'administrateur par le certificat en fonction des résultats de l'étape de comparaison.

10. Le procédé de l'une des revendications 1 à 7, caractérisé en ce que l'étape de définition d'un administrateur comprend la définition d'un administrateur dans le terminal, dans une carte à puce ou dans un support externe.

11. Le procédé de l'une des revendications 1 à 7, caractérisé en ce que l'étape de définition d'un administrateur comprend la définition manuelle par l'utilisateur de l'administrateur sur le terminal.

12. Le procédé de l'une des revendications 1 à 11, caractérisé en ce que l'étape d'envoi s'effectue à l'initiative du terminal.

13. Le procédé de l'une des revendications 1 à 11, caractérisé en ce que l'étape d'envoi s'effectue à l'initiative de la source.
